# EUROPÄISCHE PATENTSCHRIFT

(11) **EP 1 602 188 B1**
(45) Veröffentlichungstag und Bekanntmachung des Hinweises auf die Patenterteilung: **22.11.2006**
(21) Anmeldenummer: 04712000.1
(22) Anmeldetag: 18.02.2004
(51) Int. Cl.: H04J 14/02

(54) **ADD-DROP-EINRICHTUNG UND CROSS-CONNECT-EINRICHTUNG FUER WELLENLAENGEN-MULTIPLEXSIGNALE**
ADD-DROP DEVICE AND CROSS-CONNECT DEVICE FOR WAVELENGTH MULTIPLEX SIGNALS
DISPOSITIF D'INSERTION-EXTRACTION ET REPARTITEUR POUR SIGNAUX MULTIPLEXES EN LONGUEUR D'ONDE

(30) Priorität: 05.03.2003 DE 10309616; 22.08.2003 DE 10338695
(43) Veröffentlichungstag der Anmeldung: 07.12.2005
(73) Patentinhaber: SIEMENS AKTIENGESELLSCHAFT, 80333 München (DE)
(72) Erfinder: EBERLEIN, Jörg, 82515 Wolfratshausen (DE); EDER, Christian, 81373 München (DE); RICHTER, Alexander, 81475 München (DE); SCHIMPE, Robert, 85521 Ottobrunn (DE)
(86) Internationale Anmeldenummer: PCT/EP2004/001547
(87) Internationale Veröffentlichungsnummer: WO 2004/082183

(56) Entgegenhaltungen:
- WO-A-00/57665
- US-A1- 2002 101 633
- MICHAEL VASILYEV ET AL.: "Broadcast and Select OADM in 80x10.7 Gb/s Ultra-Longhaul Network" IEEE PHOTONICS TECHNOLOGY LETTERS, Bd. 15, Februar 2003 (2003-02), Seiten 332-334, XP002280039 in der Anmeldung erwähnt

## Beschreibung

Die Erfindung betrifft eine Add-Drop-Einrichtung für optische Wellenlängen-Multiplexsignale und mit mehreren dieser Einrichtungen aufgebaute Cross-Connect-Einrichtungen.

Die Übertragung von optischen Signalen erfolgt heute mit Wellenlängen-Multiplexsignalen (WDM-Signalen). Die Aufgabe einer Add-Drop-Einrichtung ist es, einzelne Signale (Kanäle) des Multiplexsignals abzuzweigen (drop) und an deren Stelle neue Signale einzufügen (add).

Mehrere dieser Add-Drop-Einrichtungen werden zu einem photonischen (rein optisch arbeitende) Cross-Connector zusammengefasst, der es erlaubt, einzelne Signale (Kanäle mit einer Wellenlänge), hier als Tributary-Signale bezeichnet, eines Multiplexsignals abzuzweigen und in ein anderes Multiplexsignal einzufügen, ohne dass eine vorherige Wandlung in elektrische Signale erforderlich ist. Darüber hinaus können die abgezweigten Tributary-Signale auch in elektrische Signale umgesetzt und in der elektrische Ebene mit niedrigerer Granularität durchgeschaltet ("geroutet") werden. Ebenso ist nach der optoelektrischen Umsetzung auch der Einsatz elektrisch arbeitender 3R-Generatoren möglich. Vor dem Einfügen in eines der optischen Multiplexsignale ist dann wieder eine elektrooptische Wandlung und gegebenenfalls auch eine Wellenlängenumsetzung erforderlich, auf die hier aber nicht weiter eingegangen werden soll.

Die bekannten photonischen Add-Drop-Einrichtungen und Cross-Connectoren verwenden optische Splitter, optische Combiner, Schaltmatrizen und wellenlängenselektive Elemente. Das Problem insbesondere bei der Verwendung von Splittern und 1:n - Schalter liegt in der Reduzierung der Nutzsignalpegel.

Dadurch ist häufig sogar eine mehrfache Anhebung der Nutzsignalpegel erforderlich; die benötigten optischen Verstärker machen aber die Einrichtungen aufwendig und teuer.

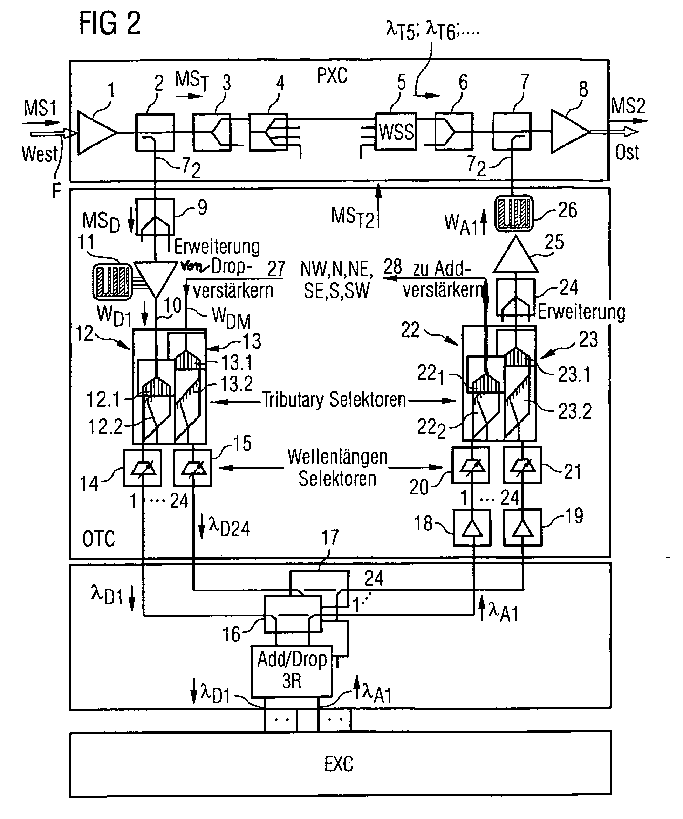

In "Journal of Lightwave Technologies", Vol. 14, Nr. 10, Okt. 1996, Seiten 2184 bis 2196 sind verschiedene Cross-Connect-Architekturen beschrieben. Fig. 2 dieses Artikels zeigt in einem Prinzipschaltbild ein optisches Ringnetz, dessen Netzknoten sowohl photonische Cross-Connectoren und Add-Drop-Einrichtungen als auch Kombinationen von photonischen und digitalen (elektrischen) Cross-Connectoren enthalten. Die digitalen Koppelfelder sind zum Durchschalten von Signalen kleinerer Granularität vorgesehen ist. Die in weiteren Abbildungen dargestellten Architekturen enthalten optische Splitter, abstimmbare Filter, Space-Switch-Matrizen und optische Combiner, gegebenenfalls ergänzt um Wellenlängenkonverter. Die Verstärkung der Signale ist schematisch durch Faserverstärker dargestellt, die dem Koppelfeld vor und nachgeschaltet sind.

In der WO 00/57665 ist ein Wellenlämgen-Add-Drop-Multiplexer beschrieben. Durch "Wavelength Slicer" (Interleaver) wird ein WDM-Signal in mehrere Teilbänder aufgeteilt. Jedes Teilband wird einem Add/Drop Swich Array zugeführt, das das Abzweigen und Einfügen einzelner Tributary Signale (Wellenlängen) an jeweils vorgegebenen Aus- und Eingängen ermöglicht. Diese starre Zuordnung von Signalen und Ports ist bereits bei den meisten Anwendungsfällen störend und für einen variablen Cross-Connector völlig ungeeignet.

In der Patentanmeldung US 2002/0101633 A1 ist ein optisches Übertragungssystem beschrieben, das Add-Drop-Einrichtungen und eine Leitungs-Schutzschaltung aufweist. Ein selektiv einstellbares Filter AOTF ermöglicht das Auskoppeln bestimm-ter Wellenlängen/Tributary Signale (Figur 2), die dann einem optischen Leistungssplitter zugeführt werden. Durch abstimmbare Filter AOTF kann an jedem der Drop-Ausgänge eine beliebige Wellenlänge, d.h. einer der selektierten Kanäle ausgegeben werden. Die Protection-Schaltung ermöglicht ein Umschalten auf ein komplettes WDM-Ersatzsignal. Es ist nicht zu ersehen, wie mit diesen Anordnungen ein Cross-Connector aufgebaut werden kann, der Kanäle mehrerer WDM-Signale nach belieben durchschaltet.

Aus "IEEE Photonics Technology Letters", Vol. 15, Nr. 2, Feb. 2003, Seiten 332 - 334 ist eine Add-Drop-Einrichtung bekannt, die in an sich bekannter Weise über einen optischen Koppler einen Teil eines Wellenlängen-Mulitplexsignals auskoppelt und über abstimmbare Filter einzelne Tributary-Signale selektiert. Die abgezweigten Signale werden durch eine einstellbare Filtereinrichtung im Through-Pfad unterdrückt. Das ausgekoppelte Teilsignal (und gegebenenfalls auch das durchgeführte Signal) wird über einen Verstärker geführt. Im Add-Zweig ist außer dem obligatorischen Verstärker ein Rauschfilter vorgesehen, das dafür sorgt, dass die durchgeführten Signale nicht unnötig durch das Verstärkerrauschens beeinträchtigt werden.

In dem US-Patent 5,504,827 ist eine Anordnung mit einem Wellenlängen-Demultipexer, programmierbaren Filtern und einem Wellenlängen-Multiplexer beschrieben, die als optischer Cross-Connector arbeitet. Die Anordnung enthält diskret aufgebaute wellenlängenselektive Schalter, die ein Durchschalten der gewünschten Signale ermöglichen.

Im US-Patent 6,268,952 werden bereits wellenlängenselektive Schalter für einen einfachen optischen Cross-Connector genutzt.

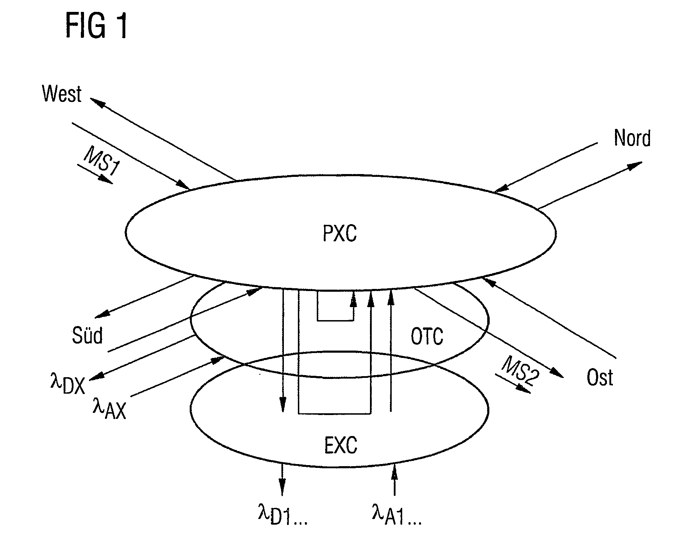

In **Fig. 1** ist das Prinzip einer optisch-elektrischen Cross-Connect-Einrichtung vereinfacht dargestellt. Die Cross-Connect-Einrichtung kann in verschiedene Layer unterteilt werden. Ein Layer, der photonische Cross-Connector PXC verschaltet nur optische (photonische) Signale. Dieser Layer empfängt und sendet Wellenlängen-Multiplexsignale und ist in der Lage über einen weiteren Layer, hier mit Optical-Tributary-Connection OTC bezeichnet, Tributary-Signale (Kanäle) einer bestimmten Wellenlänge auszukoppeln oder hinzuzufügen. Diese Tributary-Signale λ_{DX}, λ_{AX} können in optischer Form auch direkt über die Optical-Tributary-Connenction an den photonischen Cross-Connector PXC herangeführt werden oder von diesem ausgegeben werden. Wesentlich ist aber die Schnittstellenfunktion Optical-Tributary-Connection zwischen dem photonischen Cross-Connector PXC und einem elektrischen Cross-Connector EXC, der in elektrischer Form die Tributary-Signale ausgeben und empfangen kann und jedes Tributary-Signal in mehrere Teilsignale kleinerer Granularität aufteilen und als digitale Signale durchschalten kann. Fig. 1 stellt somit eine universell einsetzbare Cross-Connect-Einrichtung dar.

Aufgabe der Erfindung ist es, eine für einen Cross-Connector geeignete Add-Drop-Einrichtung anzugeben, die es bei moderatem Aufwand ermöglicht, optische Tributary-Signale/Kanäle von mehreren WDM-Signalen auf der photonischen Ebene flexibel durchzuschalten, abzuzweigen und hinzuzufügen. Außerdem soll die Cross-Connnect-Einrichtung um ein elektrisches Koppelfeld erweiterbar sein, um Tributary-Signale/Kanäle auch als elektrische Signale durchzuschalten.

Eine dieses Problem lösende Add-Drop-Einrichtung ist in Anspruch 1 angegeben; diese Add-Drop-Einrichtung verwendende Cross-Connnect-Einrichtungen sind in den Ansprüchen 9 und 10 beschrieben.

Der entscheidende Vorteil der Add-Drop-Einrichtung ist, dass die Mehrzahl der Tributary-Signale über den Längspfad geführt wird und über den im Drop-Add-Pfad nur diejenigen Signale geführt werden, die eine spezielle Behandlung erfahren, beispielsweise aus- bzw. eingekoppelt werden, regeneriert werden oder wellenlängenmäßig umgesetzt werden müssen. Die Add-Drop-Einrichtung ergänzt die optischen Durchschalteeinrichtungen um einen Drop-Add-Pfad, über den ein kleiner Teil der Tributary-Signale geführt wird.

Vorteilhaft ist insbesondere auch die Preselektion von Drop-Signalen, die dann allein im Drop-Zweig verstärkt werden müssen. Bei bisherigen Add-Drop-Einrichtungen wurden dagegen die empfangenen Wellenlängen-Multiplexsignal durch optische Splitter zunächst in viele Signale aufgeteilt, die dann alle verstärkt werden mussten, bevor eine Selektion von einzelnen Signalen (einzelnen Wellenlängen) erfolgte.

Eine Erweiterung der Add-Drop-Einrichtung ist durch im Längs-Pfad (Through-Path) und im Add-Drop-Pfad (Add-Drop-Path) eingefügte optische Splitter und Combiner problemlos möglich.

Ein mit diesen Add-Drop-Einrichtungen aufgebauter optischer Cross-Connector ermöglicht das photonische Verschalten von optischen Tributary-Signalen. Hierbei wird die Anzahl und Leistung der optischen Verstärker minimiert. Nach der Selektion von Tibutary-Signalen erfolgt entweder deren Durchschaltung oder die Umsetzung in elektrische Signale, die mit kleinerer Granularität über ein elektrisches Koppelfeld geschaltet oder auch einer elektrischen 3R-Regeneration zugeführt werden können.

Ein im Add-Zweig vorgesehenes einstellbares Add-Filter sorgt für ausreichende Rauschfreiheit in den freien Kanälen des Add-Zweigs, die mit den über den Längs-Pfad übertragenen Kanälen zu einem neuen Multiplexsignal zusammengeführt werden.

Bei den heute vorhandenen Bauelementen ist es zur Zeit noch vorteilhaft, nicht sämtliche Drop-Kanäle mittels eines einzigen optischen Filters zu selektieren, sondern durch eine Reihenschaltung von Power-Splittern und wellenlängenselektiven Elementen und optischen Schaltern entsprechende Routing-Elemente zu realisieren.

Vom Aufwand her ist es auch vorteilhaft, nicht alle möglichen Durchschaltvarianten vorzusehen, sondern, dem Bedarf entsprechend, einfachere Strukturen zu verwenden. So brauchen beispielsweise einige Tributary-Signale des Drop-Zweiges und/oder des Add-Zweiges nicht frei durchschaltbar sein.

Die Erfindung wird anhand von Ausführungsbeispielen näher beschrieben.

Es zeigen:
Fig. 2 ein Prinzipschaltbild einer Add-Drop-Einrichtung,
Fig. 3 eine vorteilhafte Erweiterungsmöglichkeit der Add-Drop-Einrichtung,
Fig. 4 ein erstes Ausführungsbeispiel des Add-Drop-Pfades und
Fig. 5 ein vereinfachtes Ausführungsbeispiel des Add-Drop-Pfades.

**Figur 2** zeigt eine von mehreren Add-Drop-Einrichtungen eines optischen Cross-Connectors.

Ein erstes Wellenlängen-Multiplexsignal MS1 wird über eine Faser F einer WEST-EAST-Verbindung empfangen und einem Eingang der Add-Drop-Einrichtung 1, 2, 3, 4, 5, 6,7 , 8, 9, 10, 11, 12, 13, 14, 15, 16, 17, 18, 19, 20, 21, 22, 23, 24, 25, 26 zugeführt. Diese enthält einen optischen Verstärker 1, einen ersten Splitter 2, der das Wellenlängen-Multiplexsignal MS1 in zwei Teilsignale, ein Multiplex-Through-Signal MS_{T} und Multiplex-Drop-Signal MS_{D} aufteilt, die jeweils einem Längspfad bzw. einem Add-Drop-Pfad zugeführt werden.

Der Längspfad (Through Path; Optical Express Layer) realisiert den optischen Cross-Connector PXC. Er enthält eine Reihenschaltung eines zweiten Splitters 3, eines Signalverzweigers 4 (vorzugsweise eines Powersplitters), eines Signal-Combiners 5 (vorzugsweise ein einstellbares Filterelements (WSS) mit mehreren Eingängen) und eines ersten Combiners 6. Der Längspfad und der Add-Drop-Pfad werden von einen zweiten Combiner 7 zusammengefasst, dem ein optischer Verstärker 8 nachgeschaltet ist. Die in Serie geschalteten Splitter und Combiner können entsprechend der gewünschten Funktion und der vorgesehenen Erweiterbarkeit auch durch andere Konfigurationen ersetzt werden.

Über einen ersten Ausgang des ersten Splitter 2 wird das Multiplex-Through-Signal MS_{T} dem Längspfad zugeführt und die abzuzweigenden Tributary-Drop-Signale λ_{D1}, λ_{D2}, ... (Kanäle) durch das einstellbare Filterelement 5, das als wellenlängenselektiver Schalter (WSS) 5 oder Wavelengthblocker realisiert werden kann, gesperrt bzw. es werden nur die gewünschten Tributary-Through-Signale λ_{T5}, λ_{T6}, ... durchgeschaltet. Die Darstellung zeigt nur den Längspfad einer einzigen Add-Drop-Einrichtung. Mehrere dieser Add-Drop-Einrichtungen arbeiten in an sich bekannter Weise als optischer Cross-Connector. Von dem Mehrfachsplitter wird das Multiplex-Through-Signal MS_{T} in mehrere Signale aufgeteilt, die dann jeweils einem Eingang eines wellenlängenselektiven Schalters (entsprechend 5) zugeführt wird. Entsprechende Multiplexsignale MS_{T2} werden den weiteren Eingängen des wellenlängenselektiven Schalters 5 der dargestellten Add-Drop-Einrichtung zugeführt. Ein Teil des kompletten empfangenden Multiplexsignals MS1 wird als Multiplex-Drop-Signal MS_{D} an einem zweiten Ausgang 2₂ dem ersten Splitter 2 für den Drop-Zweig abgezweigt. Dieser und jeweils ein Add-Zweig jeder Add-Drop-Einrichtung bilden zusammen den Drop-Add-Pfad. Das Multiplex-Drop-Signal MS_{D} wird hier über einen Upgrade-Splitter 9 einem steuerbaren frequenzselektiven Drop-Verstärker 10, 11 (beispielsweise eine Reihenschaltung eines programmierbaren Filters und eines Verstärkers) zugeführt. Dieser verstärkt lediglich die Tributary-Drop-Signale λ_{D1}, λ_{D2}, ... (Kanäle), die abgezweigt (dropped) werden. Das Ausgangssignal des Verstärkers 10, als erstes WDM-Drop-Signal W_{D1} = λ_{D1}, λ_{D2}, ... bezeichnet, wird einer ersten Splitter-Schalteinrichtung 12 zugeführt. Von diesen sind in einer Cross-Connect-Einrichtung mehrere, beispielsweise 24, vorhanden, von denen jedoch hier außer der ersten noch die vierundzwanzigste Splitter-Schalteinrichtung 13 dargestellt ist, der von einer anderen Add-Drop-Einrichtung bzw. Verbindung NW, N, NE" SE, S oder SW ein weiteres WDM-Drop-Signal W_{DM} zugeführt wird.

In jeder Splitter-Schalteinrichtung 12, 13, ... werden WDM-Drop-Signale W_{D1}, W_{D2}, .., W_{DM} durch Mehrfach-Splitter 12₁, 13₁, ... auf mehrere Ausgänge verzweigt. Die jeweils nachgeschalteten optischen Schalter 12₁, 13₂ (ein Schaltfeld) wählen im dargestellten Beispiel aus der Vielzahl der WDM-Drop-Signale die WDM-Drop-Signale W_{D1}, W_{D2}, .., W_{DM} aus und führen sie den Filtern 14, 15, .. zu. Die Splitter-Schalteinrichtungen 12, 13 arbeiten somit als Drop-Routing-Elemente für die WDM-Drop-Signale. Die Filter 14, 15 selektieren anschließend jeweils einzelne Tributary-Drop-Signal λ_{D1}, ...., λ_{D24}. Diese können dann jeweils über ein Add-Drop-Continue-Modul 16, 17 geführt und durchgeschaltet oder ausgegeben werden (bzw. einem Add-Drop-Modul zugeführt werden, wenn keine Durchschaltung erfolgen soll). Bei einer Durchschaltung wird ein selektiertes Tributary-Drop-Signal λ_{D1} als Tributary-Add-Signal λ_{A1} einer weiteren Add-Drop-Einrichtung 28 zugeführt. Entsprechendes erfolgt mit selektierten Tributary-Drop-Signalen λ_{D24}, die von anderen Add-Drop-Einrichtungen 27 kommen und in ein WDM-Add-Signal W_{A1} der dargestellten Add-Drop-Einrichtung eingefügt (added) werden.

Die Drop-Signale können über die Add-Drop-Continue-Module 16, 17 auch Verstärkern, 3R-Regeneratoren oder nach opto-elektrischer Wandlung dem digitalen Cross-Connector EXC zugeführt werden.

Der Add-Zweig ist dem Drop-Zweig entsprechend aufgebaut. Zunächst werden die einzufügenden Tributary-Drop-Signale λ_{A1}, ..., λ_{A24}, insbesondere nach einer elektrooptischen Umwandlung, durch optische Verstärker 18, 19, ... verstärkt. Das Verstärkerrauschen wird durch abstimmbare Filter 20, 21 unterdrückt bevor die Tributary-Add-Signale λ_{A1}, ···, λ_{A24} über Combiner-Schalteinrichtungen 22, 23, zusammengeführt werden. Die Combiner-Schalteinrichtungen, die entsprechend den Splitter-Schalteinrichtungen 12, 13, ... aufgebaut sind und als Add-Routing-Elemente arbeitet, weisen entsprechend dem Drop-Zweig optische Schalter 22₁, 23₁ und Mehrfach-Combiner 22₂, 23₂ auf.

Die zu einen WDM-Add-Signal W_{A1} zusammengefassten Add-Signale λ_{A24}, ... werden über einen Upgrade-Combiner 24, einen frequenzselektiven Add-Verstärker 25, 26 und einen zweiten Combiner 7 geführt und zu den durchgeschleiften Through-Signalen λ_{T5}, λ_{T5}, ... hinzugefügt. Sämtliche ausgegebenen Tributary-Signale werden in einem optischen Verstärker 8 nochmals verstärkt.

Der einstellbare frequenzselektive Add-Verstärker 25, 26 bzw. ein steuerbares Filter 26, das nur die Add-Signale durchlässt, dient in dem Add-Zweig insbesondere zur Unterdrückung des Verstärkerrauschens und verhindert außerdem eine Kollision der eingefügten Tributary-Add-Signale λ_{A24}, ... mit den durchgeschleiften Tributary-Through-Signalen λ₅, λ₆, ... bei einer Fehlfunktion.
Wie bereits beschrieben, werden meist weitere Tributary-Drop-Signale von weiteren nicht dargestellten Add-Drop-Einrichtungen (Verbindungen) 27 den weiteren Splitter-Schalteinrichtungen 13 zugeführt. Entsprechend werden im Add-Zweig von den Combiner-Schalteinrichtungen 23, ... weitere Tributary-Add-Signale weiteren nicht dargestellten Add-Drop-Einrichtungen 28 zugeführt. Die zugehörigen Verbindungen sind hier mit den Himmelsrichtungen NW, N, NE, SE, S, SW bezeichnet. Eine entsprechende Einrichtung stellt einen photonischen Cross-Connector PXC dar.

Zur Erweiterung der Add-Drop-Einrichtung bzw. der Cross-Connect-Einrichtung sind der Upgrade-Splitter 9 bzw. der Upgrade-Combiner 24 vorgesehen sowie der Splitter 3 und der Combiner 6 vorgesehen.

Die Verbindung mit einem elektrischen Cross-Connector EXC erfolgt über die Add-Drop-Continue-Module 16, 17. Der elektrische Cross-Connector EXC kann nach einer optoelektrischen Umwandlung der Tributary-Signale, beispielsweise SDH-Signale, diese in Signale beliebiger Granularität aufteilen und mit dieser Granularität durchschalten. Die Kombination von photonischem und elektrischem Cross-Connector führt zu einer Cross-Connect-Einrichtung mit weitem Einsatzbereich bei geringem Aufwand.

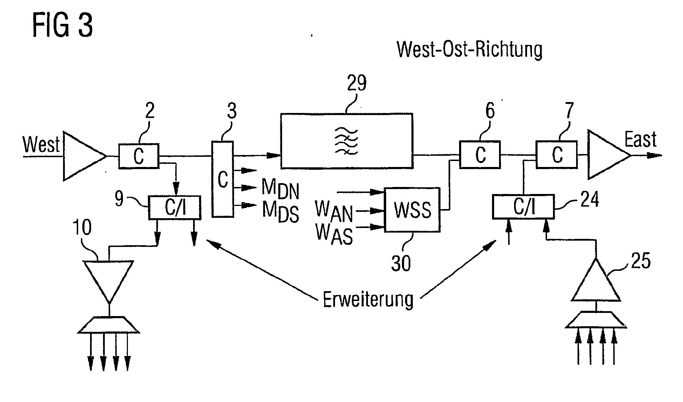

**Fig. 3** zeigt eine Erweiterungsmöglichkeit der Add-Drop-Einrichtung. In einer ersten Ausbaustufe ist im Längszweig ein Wavelenghtblocker (WB) 29 eingeschaltet, der die zu droppenden Signale sperrt. Soll die Add-Drop-Einrichtung erweitert werden, d.h., sollen nun mehr Einzelsignale abgezweigt werden, um in weitere Multiplexsignale eingefügt zu werden, so erfolgt das Abzweigen hier über den im Längszweig angeordneten Splitter 3. Die aus den Multiplex-Teilsignalen MS_{DN} und MS_{DS} selektierten Tributary-Signale (der Drop-Zweig ist in Fig. 3 nicht dargestellt) sollen nun in die Richtung Norden und Süden gesendet werden. Entsprechende WDM-Add-Signale W_{AN} und W_{AS} werden beispielsweise über einen wellenlängenselektiven Schalter 30 - oder über weitere nicht dargestellte Wavelenghtblocker - geführt und in dem Combiner 6 mit den über den Längspfad geführten Tributary-Signalen zusammengefasst.

Zusätzliche Erweiterungen der Add-Drop-Einrichtung, insbesondere der über den Drop-Add-Pfad geführten Signale, sind auch über den Upgrade-Splitter 9 und den Upgrade-Combiner 24 möglich. Sukzessive kann so eine Add-Drop-Einrichtung zu einem leistungsfähigen Cross-Connector erweitert werden.

Eine allerdings feste Preselektion der Drop-Signale kann auch bereits durch einen Interleaver "I" als Element 9 erfolgen. Auch kann die Anordnung aus Kopplern 2, 3, Interleaver 9 und Wavelengthblocker 29 durch einen wellenlängenselektiven Schalter ersetzt werden.

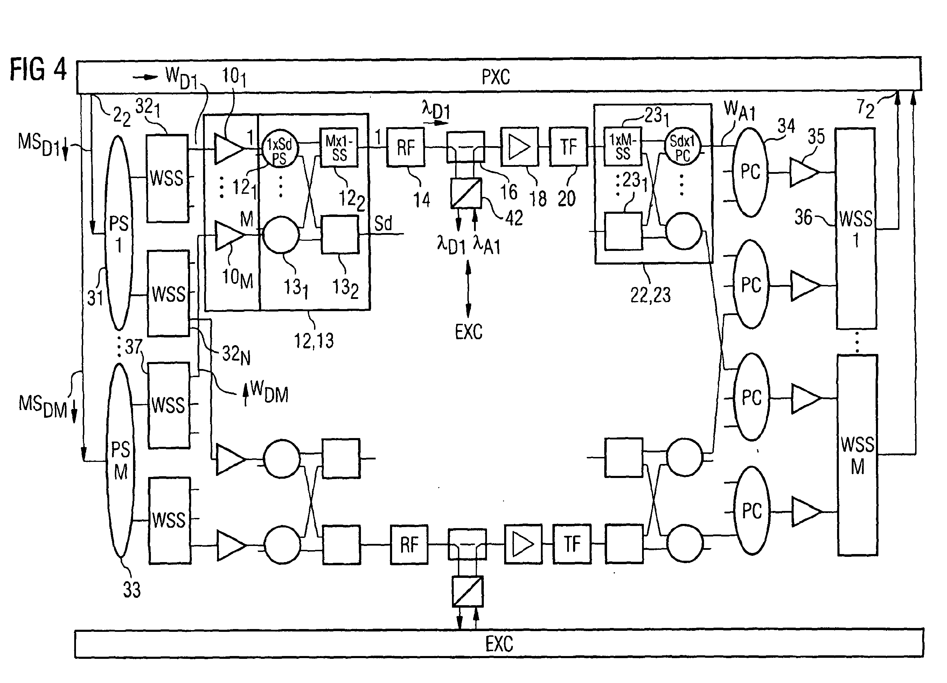

**Fig. 4** zeigt ein weiter konkretisiertes Ausführungsbeispiel der Erfindung. Um die Funktion der Anordnung leichter verstehen zu können, wurden zusätzlich zu den Bezugszeichen Abkürzungen für Bauelemente eingetragen. So bedeuten WSS - wellenlängenselektiver Schalter, PS - Power-Splitter, PC - Power-Combiner, RF-Drop-Filter und TF - Add-Filter. Dargestellt sind nur zwei von mehreren möglichen Drop-Add-Pfaden jeweils von einem zweiten Ausgang 2₂ des Splitters 2 bis zum zweiten Eingang 7₂ des Combiners 7 bzw. zwischen entsprechenden Anschlüssen der anderen Add-Drop-Einrichtungen. Weitere gleich aufgebaute Drop-Add-Pfade sind nur durch Punkte angedeutet. Das erste Multiplex-Drop-Signal MS_{D1} wird zunächst über einen Splitter 31 in mehrere weitere gleiche Multiplex-Teilsignale aufgeteilt und dann wellenlängenselektiven Schaltern 32₁ bis 32_{N} zugeführt, die jeweils ein oder mehrere Tributary-Signale selektieren, hier die abzuzweigenden Tributary-Drop-Signale λ_{D1}, λ_{D2}, .
Ein Ausgangssignal des wellenlängenselektiven Schalters 32₁, das WDM-Drop-Signal W_{D1}, wird dem oberen Drop-Zweig zugeführt; das durch den wellenlängenselektiven Schalters 32_{N} preselektierte WDM-Drop-Signal wird dagegen dem untersten Drop-Zweig zugeführt. Die weiteren nicht bezeichneten Ausgänge der wellenlängenselektive Schalter 32₁ bis 32_{N} dienen der Erweiterung des Schaltfeldes oder werden den Drop-Zweigen anderer Add-Drop-Einrichtungen (für andere Verbindungen) zugeführt. So werden dem oberen Drop-Zweig weitere WDM-Drop-Signale z.B. vom wellenlängenselektiven Schalter 37 zugeführt, dargestellt ist dies für das WDM-Drop-Signal W_{DM}. Die Kombination von Splittern und wellenlängenselektiven Schaltern dient stets der Preselektion der Tributary-Drop-Signale.

Die WDM-Drop-Signale W_{D1} werden in optischen Verstärkern 10₁, ..., 10_{M} verstärkt und dann jeweils über einen weiteren Splitter 12₁, ..., 13₁ erneut aufgeteilt. Diese Aufteilung auf Sd Teilsignale erfolgt entsprechend der Schaltkapazität und dem benötigten Signalpegel. Die Ausgänge dieser Splitter sind jeweils mit einem Eingang von M:1-Schaltern 12₂ bis 13₂ verbunden. Entsprechend Fig. 2 sind nur zwei der (Space-) Schalter des oberen Drop-Zweiges dargestellt. Die Anordnung entspricht wieder einem Drop-Routing-Element.

Den Ausgängen der M:1-Schalter 12₂ bis 13₂ sind jeweils ein abstimmbares Filter 14 nachgeschaltet, so dass die Einzelselektion eines Tributary-Drop-Signals möglich ist (eine Alternative zur Kombination von Schaltern 12₂ und 13₂ und Filtern 14, ... stellen weitere wellenlängenselektive Schalter dar). Diese Anordnung der Splitter und wellenlängenselektiver Schalter sowie der Filter entspricht somit wieder der Reihenschaltung eines Wellenlängen-Routing-Elements und einer Selektionseinrichtung.

Wie bereits kurz beschrieben, wird von weiterer Add-Drop-Einrichtungen, hier der unteren, falls die entsprechende Schaltflexibilität erwünscht ist, jeweils ein WDM-Drop-Signal vom Ausgang eines zugehörigen wellenlängenselektiven Schalters 37 über einen Verstärker 10_{M} an die Splitter 10_{M}, ... des eben beschriebenen Drop-Zweiges geführt. Diese Anordnung entspricht somit funktionsmäßig dem einfacheren Ausführungsbeispiel nach Fig. 2.

Über Add-Drop-Continue-Module 16 kann jedes selektierte Tributary-Signal λ_{D1}, .. optisch verstärkt oder nach einer Umsetzung in ein elektrisches Signal einer 3R-Regeneration einem Add-Zweig einer anderen Add-Drop-Einrichtung zugeführt werden. Ebenso kann das Tributary-Signal nur regeneriert und wieder eingefügt werden. Nach der Umsetzung in elektrische Form durch den optoelektronischen Wandler 42 kann es dem elektrischen Cross-Connector EXC zugeführt werden, so dass die Durchschaltung von Signalen kleinerer Granularität möglich ist.

Der Add-Zweig ist dem Drop-Zweig weitgehend entsprechend aufgebaut, wobei die Position des Add-Filters der aus Fig. 2 entspricht. Zunächst werden hinzuzufügende optische Tributary-Add-Signal λ_{A1} in einem optischen Verstärker 18 verstärkt und anschließend die Rauschanteile außerhalb des Spektrums des Tributary-Add-Signals durch ein Filter 20 reduziert. Um das Einfügen dieses Tributary-Add-Signals λ_{A1} in unterschiedliche Multiplexsignale zu ermöglichen, kann es durch einen 1:M-Space-Schalter 22₁ an verschiedene Ausgänge durchgeschaltet werden, die wiederum mit unterschiedlichen Combinern 22₂ bis 23₂ verbunden sind. Die Ausgänge der Combiner 22₂ bis 23₂, an denen mehrere Tributary-Add-Signale abgegeben werden bzw. ein WDM-Add-Signal abgegeben wird, sind wieder mit Eingängen von weiteren Combinern 34, ... verbunden. Über einen optischen Verstärker 35 werden hier die einem wellenlängenselektiven Schalter 36 zugeführt und mit anderen WDM-Add-Signalen zusammengefasst. Der wellenlängenselektive Schalter 36 dient wieder dem herausfiltern unerwünschter Rauschspektren. Ob mehrerer Einzelverstärker 35, ... erforderlich sind oder nach dem Zusammenfassen von Signalen ein gemeinsamer optischer Verstärker ausreicht, dem nur ein wellenlängenselektiver Schalter Wavelengthblocker folgt, hängt von der Größe des photonischen Cross-Connectors PXC und seiner Dimensionierung ab. Der wellenlängenselektive Schalter kann durch ein steuerbares Filter, einen Wavelengthblocker entsprechend Figur 2, ersetzt werde.

Je nach vorhandenen Bauelementen können auch Splitter und wellenlängenselektive Schalter bzw. Combiner und wellenlängenselektive Schalter zusammengefasst werden.

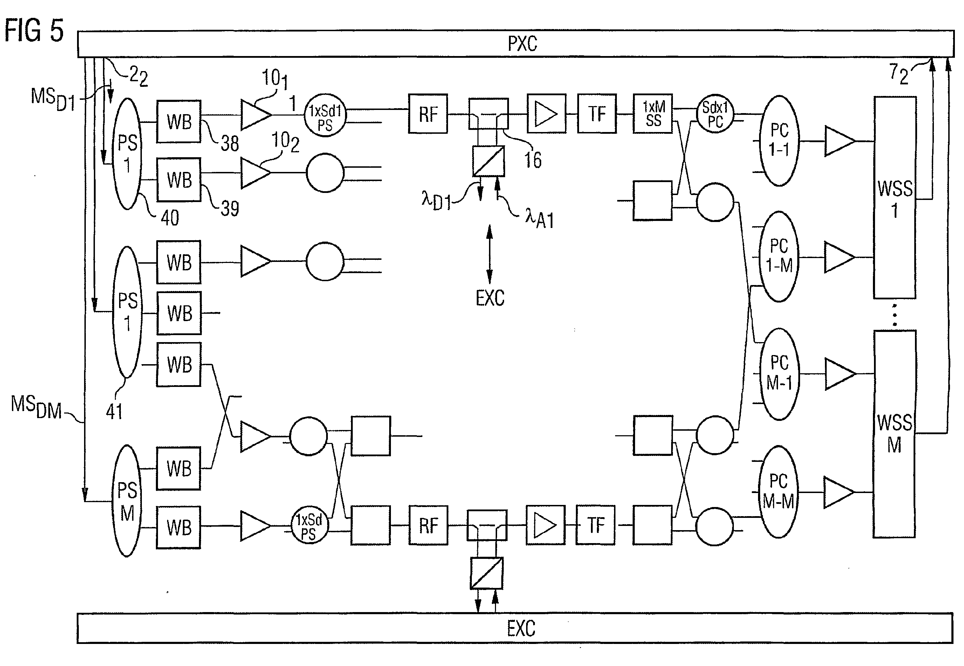

**Fig. 5** zeigt eine teilweise vereinfachte Ausführung der Drop-Zweige einer Add-Drop-Einrichtung. Ein Splitter 40 mit mehreren Ausgängen, an die Wavelengthblocker (WB) 38 und 39 angeschaltet sind, arbeitet hier als Wellenlängen-Routing-Element, das es gestattet, einige WDM-Drop-Signale abzuzweigen, die über den Verstärker 10₁ und den Splitter 12₁ geführt werden. An die Ausgänge des Splitter 12₁ ist jeweils ein Filter angeschaltet, das jeweils die Selektion eines Tributary-Drop-Signals ermöglicht. Die Tributary-Drop-Signale können wiederum über das Add-Drop-Continue-Modul 16 dem elektrischen Koppelfeld oder einem Regenerator zugeführt werden. Der Add-Zweig kann symmetrisch zum Drop-Zweig oder wie bisher ausgeführt werden. Ein folgende Drop-Zweig, der von einem Splitter 2₂₂ ein Multiplex-Teilsignal MS_{D2} erhält, spaltet dieses in einen Splitter 41 in drei Teilsignale auf, aus denen durch Wavelengthblocker weitere WDM-Drop-Signale selektiert werden. Zwei WDM-Drop-Signale werden, wie im ersten Add-Drop-Pfad beschrieben, geroutet, während das dritte WDM-Drop-Signal, wie unter Fig. 4 beschrieben, dem Drop-Zweig einer weiteren Add-Drop-Einrichtung zugeführt wird und zusammen mit dem aus dem WDM-Teilsignal MS_{DM} gewonnenen WDM-Drop-Signal WD_{M} geroutet werden kann. Beliebige Mischformen sind hier möglich.

## Patentansprüche

1. Add-Drop-Einrichtung, der ein optisches Wellenlängen-Multiplexsignal (MS1) zugeführt wird, mit einem Längszweig (3,4,5,6), der mindestens ein einstellbares wellenlängenselektives Element (4, 5, 29, 30) enthält, das nur Tributary-Längssignalen (λ_{T5}, λ_{T6}, ...) durchlässt, mit einem Drop-Zweig (9,10, 11, 12, 14), dem ein ausgekoppeltes Multiplex-Drop-Signal (MS_{D}) zugeführt wird und der weitere wellenlängenselektive Elemente (10, 11; 32₁, 32_{N}) zum Selektieren von Tributary-Drop-Signalen (λ_{D1}, λ_{D2},...) enthält, und mit einem Add-Zweig (19, 21, 23, 24, 25, 26), über den Tributary-Add-Signale (λ_{A1}, λ_{A2,} ...) eingekoppelt und mit über den Längszweig geführten Tributary-Through-Signalen (λ_{T5}, λ_{T6}, ...) zu einem auszusendenden Multiplexsignal (MS2) zusammengefasst werden,
**dadurch gekennzeichnet,**
**dass** der Längspfad einen Signalverzweiger (4) aufweist, über den Längssignale (MS_{T}) anderen Add-Drop-Einrichtungen zugeführt werden,
**dass** der Längspfad einen Signalkombinierer (5) aufweist, über den Längssignale (MS_{T2}) von anderen Add-Drop-Einrichtungen empfangen und mit den über den Längszweig geführten Tributary Längssignalen (λ_{T5}, λ_{T6}, ...) kombiniert werden,
**dass** in dem Drop-Zweig (9, 10, 11, 12, 14) mindestens ein einstellbares wellenlängenselektives Element (10, 11) zur Preselektion eines aus Tributary-Drop-Signalen (λ_{D1}, λ_{D2},...) zusammengesetzten WDM-Drop-Signals (W_{D1}) angeordnet ist,
**dass** dem wellenlängenselektiven Element (10, 11) ein Drop-Routing-Element (12; 12₁, 12₂,) nachgeschaltet ist, dem das WDM-Drop-Signal (W_{D1}) zugeführt wird,
**dass** weiteren Drop-Routing-Elementen (13; 13₁, 13₂) weitere WDM-Drop-Signale (W_{DM}) von anderen Add-Drop-Einrichtungen (27) zugeführt werden, so dass durch die Drop-Routing-Elemente (12, 13; 12₁, 12₂; 13₁, 13₂) WDM-Drop-Signale (W_{D1} - W_{DM}) ausgewählt werden können,
**dass** den Drop-Routing-Elementen (12, 13; 12₁, 12₂; 13₁, 13₂) einstellbare Filterelemente (14, 15) nachgeschaltet sind, die eine Einzelselektion der Tributary-Drop-Signale (λ_{D1}, λ_{D2},...) durchführen,
**dass** in einem Add-Zweig Add-Routing-Elemente (22, 23; 22₁, 22₂, 23₁, 23₂) angeordnet sind, die Tributary-Add-Signale (λ_{A1}, ..., λ_{A24}) zu einem WDM-Add-Signal (W_{A1}) zusammenfassen, das mit den Längssignalen zusammengefasst wird, und weitere Tributary-Add-Signale (λ_{A1}, ... , λ_{A24}) zu weiteren WDM-Add-Signalen zusammenfassen, die weiteren Add-Drop-Einrichtungen (28) zugeführt werden.

2. Add-Drop-Einrichtung nach Anspruch 1, bei der
das preselektierte WDM-Drop-Signal (W_{D1} = λ_{D1}, λ_{D2}, ...) über einen Drop-Verstärker (10) den Drop-Routing-Elementen (12; 12₁, 12₂; 13; 13₁, 13₂) zugeführt wird.

3. Add-Drop-Einrichtung nach Anspruch 1, bei der
im Add-Zweig (19, 21, 23, 24, 25, 26) ein Add-Verstärker (25) angeordnet ist, über den das WDM-Add-Signal (W_{A1}) geführt wird.

4. Add-Drop-Einrichtung nach Anspruch 1 **oder 3,** bei der
in den Add-Zweigen (18, 20, 22, ...; 19, 21,23, 24, 25, 26) jeweils ein einstellbares Filterelement (20, 21) mit Bandpasseigenschaften angeordnet ist, über das ein Tributary-Add-Signal (λ_{A24}) geführt wird, und dass die Ausgänge dieser Filterelemente (20, 21) mit Eingängen der Add-Routing-Elemente (22, 23) verbunden sind.

5. Add-Drop-Einrichtung nach Anspruch 4, bei der
im Add-Zweig (19, 21,23, 24, 25, 26) ein wellenlängenselektives Element (26) angeordnet ist, über das das WDM-Add-Signal (W_{A1}) geführt wird.

6. Add-Drop-Einrichtung nach Anspruch 1 oder 3, bei der
im Drop-Zweig und/oder im Längszweig Erweiterungs-Splitter (9, 3) vorgesehen sind, über die weitere Multiplex-Drop-Signale (W_{DN}, W_{DS}) abgezweigt werden, und dass im Add-Zweig und/oder im Längszweig Erweiterungs-Kombinierer (24, 6) vorgesehen sind, über die weitere WDM-Add-Signale (W_{AN}, W_{AS}) eingekoppelt werden können.

7. Add-Drop-Einrichtung nach Anspruch 6, bei der
einem der Erweiterungs-Kombinierer (6, 24) bei einer Erweiterung ein weiteres wellenlängenselektives Element (30) vorgeschaltet wird, über das weitere WDM-Add-Signale (W_{AN}, W_{AS}) eingefügt werden.

8. Add-Drop-Einrichtung nach einem der vorhergehenden Ansprüche, bei der
ein Add-Drop-Continue-Modul (16, 17) vorgesehen ist, über das die Tributary-Drop-Signale (λ_{D1}, λ_{D2}, ..) durchgeschaltet oder abgezweigt werden und die Tributary-Add-Signale (λ_{A1}, λ_{A2}, ..) eingefügt werden können oder dass ein Add-Drop-Modul vorgesehen ist, über das die Tributary-Drop-Signale (λ_{D1}, λ_{D2}, ..) abgezweigt werden können und die Tributary-Add-Signale (λ_{A1}, λ_{A2}, ..) eingefügt werden.

9. Add-Drop-Einrichtung nach Anspruch 8, bei der
über das Add-Drop-Continue-Modul (16, 17) oder das Add-Drop-Modul ein Regenerator oder ein Wellenlängenumsetzer angeschlossen ist.

10. Cross-Connector für optische Signale, der
aus mehreren Add-Dropp-Einrichtungen (1, 2, 3, 4, 5, 6, 7 , 8, 9, 10, 11, 12, 13, 14, 15, 16, 17, 18, 19, 20, 21, 22, 23, 24, 25, 26) nach einem der vorhergehenden Ansprüche gebildet ist.

11. Cross-Connect-Einrichtung zum Durchschalten optischer und elektrischer Signale mit einem photonischen Cross-Connector (PXC) und mit einem elektrischen Cross-Connector (EXC), bei der
der photonische Cross-Connector (PXC) mehrere Add-Dropp-Einrichtungen (1, 2, 3, 4, 5, 6,7 , 8, 9, 10, 11, 12, 13, 14, 15, 16, 17, 18, 19, 20, 21, 22, 23, 24, 25, 26) nach einem der Ansprüche 1 bis 9 enthält.

12. Cross-Connector-Einrichtung nach Anspruch 10 oder 11, bei der
in dem Drop-Zweig (31, 32₁, 12₁, 12₂, 14, 16) einer Add-Drop-Einrichtung ein erstes Preselektions-Element (31, 32₁, ..., 32_{N}) angeordnet ist, dessen Eingang ein erstes Multipex-Drop-Signal (MS_{D1}) zugeführt wird und an dessen Ausgängen preselektierte Tributary-Drop-Signale (λ₁, λ₂, ...) enthaltende WDM-Drop-Signale (W_{D1}, W_{D2}) abgegeben werden,
dass an die Ausgänge des Preselektions-Elements (31, 32₁, ..., 32_{N}) jeweils ein optischer Verstärker (10₁, 13₁) angeschaltet ist,
dass Eingänge der Drop-Routing-Elemente (12₁, 12₂, ..., 13₁, 13₂) jeweils über die Verstärker (10₁, 13₁) mit einem Ausgang von Preselektions-Elementen (33, 37) weiterer Add-Drop-Einrichtungen angeschaltet sind, wobei ein Drop-Routing-Element (12₁, 12₂, ..., 13₁, 13₂) mehrere 1:Sd-Splitter (12₁, ..., 13₁) und mehrere an deren Ausgängen angeschaltete optische M:1-Schalter (12₂, ..., 13₂) aufweist und zumindest von einem anderen Wellenlängen-Multiplexsignal (MS_{M}) ein weiteres WDM-Drop-Signal (W_{DM}) zugeführt wird, dass jeweils ein einstellbare Filter (14) an einen Ausgang der optischen M:1-Schalter (12₂, 13₂) angeschaltet ist zur Selektion jeweils eines Tributary-Drop-Signals (λ_{D1}, λ_{D2}, ...),
dass ein ausgewähltes Tributary-Drop-Signal (λ_{D1}) über ein Add-Drop-Continue-Module (34) durchgeschaltet oder an den elektrischen Cross-Connector (EXC) geführt wird,
dass in dem Add-Zweig die Tributary-Add-Signale (λ_{A1}) einem 1:M-Schalter (22₁) zugeführt werden und dass Ausgänge mehrerer 1:M-Schalter (22₁) mit Eingängen von Kombinierern (22₂, 23₂, 34) verbunden sind, die die Tributary-Add-Signale (λ_{A1}) zu einem WDM-Add-Signal (W_{A1}) zusammenfassen.

13. Cross-Connector-Einrichtung nach Anspruch 10 oder 11, bei der
in einem Drop-Zweig einem Preselektions-Element (37, 38, 39) ein erstes Multiplex-Drop-Signal (MS_{D1}) zugeführt wird, das das Multiplex-Drop-Signal (MS_{D1}) in mehrere unterschiedliche Tributary-Drop-Signale (λ_{D1}, λ_{D2}; λ_{3D}, λ_{D4},...) enthaltende WDM-Drop-Signale (WD1, WD2) aufteilt, dass an die Ausgänge des Preselektions-Elements (37, 38, 39) Verstärker (10₁, 10₂) angeschaltet sind,
dass an Ausgänge der Verstärker (10₁, 10₂) als Routing-Elemente jeweils ein Splitter (12₂) angeschaltet ist und dass an die Ausgänge der Splitter (12₂) einstellbare Filter (14) zur Einzelselektion von Tributary-Drop-Signalen (λ_{D1}) angeschaltet sind, deren Ausgänge jeweils mit einem der Add-Drop-Continue-Module (16) verbunden sind.

## Claims

1. Add-drop device, to which an optical wavelength multiplex signal (MS1) is fed, having a through path (3, 4, 5, 6) containing at least one adjustable wavelength selective element (4, 5, 29, 30), which allows only tributary through signals (λ_{T5}, λ_{T6}, ... ) to pass, having a drop branch (9, 10, 11, 12, 14) to which a dropped multiplex drop signal (MS_{D}) is fed and which contains further wavelength-selective elements (10, 11; 32₁, 32_{N}) for the selection of tributary drop signals (λ_{D1}, λ_{D2}, ...), and having an add branch (19, 21, 23, 24, 25, 26) by way of which tributary add signals (λ_{A1}, λ_{A2}, ...) are added and are combined with tributary through signals (λ_{T5}, λ_{T6}, ...) routed by way of the through path to form a multiplex signal (MS2) which is to be transmitted,
**characterised in that**
the through path comprises a signal branching facility (4) by way of which through signals (MS_{T}) are fed to other add-drop devices,
**in that** the through path comprises a signal combiner (5) by way of which through signals (MS_{T2}) are received from other add-drop devices and are combined with the tributary through signals (λ_{T5}, λ_{T6}, ...) routed by way of the through branch,
**in that** at least one adjustable wavelength-selective element (10, 11) for the preselection of a WDM drop signal (W_{D1}) composed of tributary drop signals (λ_{D1}, λ_{D2}, ...) is located in the drop branch (9, 10, 11, 12, 14),
**in that** a drop routing element (12; 12₁, 12₂) is arranged downstream of the wavelength selective element (10, 11), to which drop routing element the WDM drop signal (W_{*D*1})is fed, **in that** further WDM drop signals (W_{*DM*}) are fed to further drop routing elements (13; 13₁, 13₂), by way of other add-drop devices (27) so that WDM drop signals (*W*_{*D*1}*-w*_{*DM*}) can be selected by means of the drop routing elements (12, 13; 12₁, 12₂ 13₁, 13₂).
**in that** adjustable filter elements (14, 15) which perform an individual selection of the tributary drop signals (λ_{D1}, λ_{D2}, ...) are connected downstream of the drop routing elements (12, 13; 12₁, 12₂, 13₁, 13₂) and
**in that** add routing elements (22, 23; 22₁, 22₂, 23₁, 23₂) are arranged in an add branch, said add routing elements combining for form a WDM add signal (W_{A1}), which is combined with through signals and further tributary add signals (λ_{A1}, λ_{A24}, ...) combine to form further WDM add signals, which are fed to further add drop devices.

2. Add-drop device according to claim 1,
wherein
the preselected WDM drop signal (W_{D1} = λ_{D1}, λ_{D2}, ...) is fed to the drop routing elements (12, 13; 12₁, 12₂, 13₁, 13₂) by way of a drop amplifier (10).

3. Add-drop device according to claim 1,
wherein
an add amplifier (25) is arranged in the add branch (19, 21, 23, 24, 25, 26), by means of which add amplifier the WDM add signal (W_{A1}) is fed.

4. Add-drop device according to claim 1 or 3,
wherein
an adjustable filter element (20, 21) with band-pass properties, by way of which a tributary add signal (λ_{A24}) is routed, is located in each of the add branches (18, 20, 22, ...; 19, 21, 23, 24, 25, 26), and that the outputs of these filter elements (20, 21) are connected to the add routing elements (22, 23).

5. Add-drop device according to claim 4,
wherein
a wavelength-selective element (26), by way of which the WDM add signal (W_{A1}) is routed, is located in the add branch (19, 21, 23, 24, 25, 26).

6. Add-drop device according to claim 1 or 3,
wherein
extension splitters (9, 3), by way of which further multiplex drop signals (W_{DN}, W_{DS}) can be dropped, are provided in the drop branch and/or in the through branch, and that extension combiners (24, 6), by way of which further WDM add signals (W_{AN}, W_{AS}) can be added, are provided in the add branch and/or in the through branch.

7. Add-drop device according to claim 6,
wherein
a further wavelength-selective element (30), by way of which further WDM add signals (W_{AN}, W_{AS}) are added, is connected upstream of the extension combiner (6, 24) in the case of an extension.

8. Add-drop device according to one of the preceding claims,
wherein
an add-drop-continue module (16, 17), by way of which the tributary drop signals (λ_{D1}, λ_{D2}, ...) are routed or dropped and the tributary add signals (λ_{A1}, λ_{A2}, ..) can be added, is provided, or that an add drop module, by way of which the tributary drop signals (λ_{D1,} λ_{D2}, ...) can be dropped and the tributary add signals (λ_{A1,} λ_{A2}, ...) are added, is provided.

9. Add-drop device according to claim 8,
wherein
a regenerator or a wavelength converter is connected by way of the add-drop-continue module (16, 17) or the add-drop module.

10. Cross-connector for optical signals,
which is formed from a plurality of add-drop devices (1, 2, 3, 4, 5, 6, 7 , 8, 9, 10, 11, 12, 13, 14, 15, 16, 17, 18, 19, 20, 21, 22, 23, 24, 25, 26) according to one of the preceding claims.

11. Cross-connect device for routing optical and electrical signals with a photonic cross-connector (PXC) and with an electrical cross-connector (EXC),
wherein
the photonic cross-connector (PXC) contains a plurality of add-drop devices (1, 2, 3, 4, 5, 6, 7, 8, 9, 10, 11, 12, 13, 14, 15, 16, 17, 18, 19, 20, 21, 22, 23, 24, 25, 26) according to one of claims 1 to 9.

12. Cross-connector device according to claim 10 or 11,
wherein
a first preselection element (31, 32₁, ..., 32_{N}) to whose input a first multiplex drop signal (MS_{D1}) is fed and at whose outputs WDM drop signals (W_{D1}, W_{D2}) containing preselected tributary drop signals (λ₁, λ₂, ...) are issued is located in the drop branch (31, 32₁, 12₁, 12₂, 14, 16) of an add-drop device,
in that an optical amplifier (10₁, 13₁) is connected to each of the outputs of the preselection element (31, 32₁, ... , 32_{N}),
in that inputs of the drop routing elements (12₁, 12₂, ..., 13₁, 13₂) are connected in each case by way of the amplifiers (10₁, 13₁) to an output of preselection elements (33, 37) of further add-drop devices,
whereby a drop routing element (12₁, 12₂, ..., 13₁, 13₂) comprises a plurality of 1:Sd splitters (12₁, ..., 13₁) and a plurality of optical M:1 switches (12₂, ..., 13₂) connected to their outputs and a further WDM drop signal (W_{DM}) is fed at least from one other wavelength multiplex signal (MS_{M}),
in that an adjustable filter (14) is connected in each case to an output of the optical M:1 switches (12₂, 13₂) for the selection of a tributary drop signal (λ_{D1}, λ_{D2}, ...) in each case,
in that a selected tributary drop signal (λ_{D1}) is routed by way of an add-drop-continue module (34) or is routed to the electrical cross-connector (EXC),
in that in the add branch the tributary add signals (λ_{A1}) are fed to a 1:M switch (22₁) and that outputs of a plurality of 1:M switches (22₁) are connected to inputs of combiners (22₂, 23₂, 34) which combine the tributary add signals (λ_{A1}) to form a WDM add signal (W_{A1}).

13. Cross-connector device according to Claim 10 or 11,
**characterised**
**in that** a first multiplex drop signal (MS_{D1}) which divides the multiplex drop signal (MS_{D1}) into a plurality of different WDM drop signals (WD1, WD2) containing tributary drop signals (λ_{D1}, λ_{D2}; λ_{3D}, λ_{D4}, ...) is fed to a preselection element (37, 38, 39) in a drop branch,
**in that** amplifiers (10₁, 10₂) are connected to the outputs of the preselection element (37, 38, 39),
**in that** a splitter (12₂) is connected as a routing element in each case to outputs of the amplifiers (10₁, 10₂), and
**in that** adjustable filters (14) are connected to the outputs of the splitters (12₂) for the individual selection of tributary drop signals (λ_{D1}), whose outputs are connected in each case to one of the add-drop-continue modules (16).

## Revendications

1. Dispositif d'insertion / extraction auquel est amené un signal optique multiplexé en longueur d'onde (MS1), comprenant une traversée (3, 4, 5, 6) qui contient au moins un élément réglable sélectif de longueur d'onde (4, 5, 29, 30), lequel ne laisse passer que des signaux traversants tributaires (λ_{T5}, λ_{T6}, ...), avec une branche d'extraction (9, 10, 11, 12, 14) à laquelle est amené un signal d'extraction multiplexé (MSD) qui a été prélevé et qui contient d'autres éléments sélectifs de longueur d'onde (10, 11; 32₁, 32_{N}) pour sélectionner des signaux d'extraction tributaires (λ_{D1}, λ_{D2}, ...) et avec une branche d'insertion (19, 21, 23, 24, 25, 26) par l'intermédiaire de laquelle des signaux d'insertion tributaires (λ_{A1}, λ_{A2}, ...) sont injectés et sont regroupés avec des signaux traversants tributaires (λ_{T5}, λ_{T6}, ...) passant par la traversée pour constituer un signal multiplexé (MS2) à émettre,
**caractérisé**
**en ce que** la traversée comporte un répartiteur de signaux (4) via lequel des signaux traversants (MS_{T}) sont amenés à d'autres dispositifs d'insertion / extraction,
**en ce que** la traversée comporte un combinateur de signaux (5), via lequel des signaux traversants (MS_{T2}) sont reçus par d'autres dispositifs d'insertion / extraction et sont combinés avec les signaux traversants tributaires (λ_{T5}, λ_{T6}, ...) passant par la traversée,
**en ce qu'**est situé, dans la branche d'extraction (9, 10, 11, 12, 14), au moins un élément réglable sélectif de longueur d'onde (10, 11) pour la présélection d'un signal d'extraction WDM (W_{D1}) composé de signaux d'extraction tributaires (λ_{D1}, λ_{D2}, ...),
**en ce qu'**est monté en aval de l'élément sélectif de longueur d'onde (10, 11) un élément de routage / extraction (12, 12₁, 12₂) auquel est amené le signal d'extraction WDM (W_{D1}),
**en ce que** d'autres signaux d'extraction WDM (W_{DM}) sont amenés à d'autres éléments de routage / extraction (13; 13₁, 13₂) par d'autres dispositifs d'insertion / extraction (27) de sorte que des signaux d'extraction WDM (W_{D1} - W_{DM}) peuvent être sélectionnés par les éléments de routage / extraction (12, 13; 12₁, 12₂; 13₁, 13₂),
**en ce que** sont montés en aval des éléments de routage / extraction (12, 13; 12₁, 12₂; 13₁, 13₂) des éléments de filtrage réglables (14, 15) qui effectuent une sélection individuelle des signaux d'extraction tributaires (λ_{D1}, λ_{D2}, ...),
**en ce que** sont situés, dans une branche d'insertion, des éléments de routage / insertion (22, 23; 22₁, 22₂, 23₁, 23₂) qui regroupent les signaux d'insertion tributaires (λ_{A1}, ..., λ_{A24}) pour constituer un signal d'insertion WDM (W_{A1}) qui est regroupé avec les signaux traversants, et d'autres signaux d'insertion tributaires (λ_{A1}, ... , λ_{A24}) pour constituer d'autres signaux d'insertion WDM qui sont amenés à d'autres dispositifs d'insertion / extraction (28).

2. Dispositif d'insertion / extraction selon la revendication 1, dans lequel le signal d'extraction WDM présélectionné (W_{D1} = λ_{D1,} λ_{D2,} ... ) est amené aux éléments de routage / extraction (12; 12₁, 12₂; 13; 13₁, 13₂) via un amplificateur à extraction (10).

3. Dispositif d'insertion / extraction selon la revendication 1, dans lequel est situé, dans la branche d'insertion (19, 21, 23, 24, 25, 26), un amplificateur à insertion (25) par lequel passe le signal d'insertion WDM (W_{A1}).

4. Dispositif d'insertion / extraction selon la revendication 1 ou 3, dans lequel est respectivement situé, dans les branches d'insertion (18, 20, 22, ...; 19, 21, 23, 24, 25, 26) un élément de filtrage réglable (20, 21) avec des caractéristiques passe-bande, par lequel passe un signal d'insertion tributaire (λ_{A24}), et dans lequel les sorties de ces éléments de filtrage (20, 21) sont reliées à des entrées des éléments de routage / insertion (22, 23).

5. Dispositif d'insertion / extraction selon la revendication 4, dans lequel est situé, dans la branche d'insertion (19, 21, 23, 24, 25, 26), un élément sélectif de longueur d'onde (26) par lequel passe le signal d'insertion WDM (W_{A1}).

6. Dispositif d'insertion / extraction selon la revendication 1 ou 3, dans lequel sont prévus, dans la branche d'extraction et/ou dans la traversée, des séparateurs d'élargissement (9, 3) par l'intermédiaire desquels d'autres signaux d'extraction multiplexés (W_{DN}, W_{DS}) sont extraits et dans lequel sont prévus, dans la branche d'insertion et/ou dans la traversée, des combinateurs d'élargissement (24, 6) par l'intermédiaire desquels d'autres signaux d'insertion WDM (W_{AN}, W_{AS}) peuvent être injectés.

7. Dispositif d'insertion / extraction selon la revendication 6, dans lequel est monté, en amont de l'un des combinateurs d'élargissement (6, 24), dans le cas d'un élargissement, un autre élément sélectif de longueur d'onde (30) par l'intermédiaire duquel d'autres signaux d'insertion WDM (W_{AN}, W_{AS}) sont insérés.

8. Dispositif d'insertion / extraction selon l'une des revendications précédentes, dans lequel est prévu un module d'insertion / extraction / suite (16, 17) par l'intermédiaire duquel les signaux d'extraction tributaires (λ_{D1}, λ_{D2}, ...) sont routés ou extraits et les signaux d'insertion tributaires (λ_{A1}, λ_{A2}, ...) peuvent être insérés ou dans lequel est prévu un module d'insertion / extraction par l'intermédiaire duquel les signaux d'extraction tributaires (λ_{D1}, λ_{D2}, ...) peuvent être extraits et les signaux d'insertion tributaires (λ_{A1}, λ_{A2}, ...) sont insérés.

9. Dispositif d'insertion / extraction selon la revendication 8, dans lequel est raccordé, via le module d'insertion / extraction / suite (16, 17) ou le module d'insertion / extraction, un régénérateur ou un convertisseur de longueurs d'onde.

10. Répartiteur pour signaux optiques, lequel est constitué par plusieurs dispositifs d'insertion / extraction (1, 2, 3, 4, 5, 6, 7, 8, 9, 10, 11, 12, 13, 14, 15, 16, 17, 18, 19, 20, 21, 22, 23, 24, 25, 26) selon l'une des revendications précédentes.

11. Dispositif de répartition pour router des signaux optiques et électriques, comprenant un répartiteur photonique (PXC) et un répartiteur électrique (EXC), dans lequel le répartiteur photonique (PXC) contient plusieurs dispositifs d'insertion / extraction (1, 2, 3, 4, 5, 6, 7, 8, 9, 10, 11, 12, 13, 14, 15, 16, 17, 18, 19, 20, 21, 22, 23, 24, 25, 26) selon l'une des revendications 1 à 9.

12. Dispositif de répartition selon la revendication 10 ou 11,
dans lequel
est situé, dans la branche d'extraction (31, 32₁, 12₁, 12₂, 14, 16) d'un dispositif d'insertion / extraction, un premier élément de présélection (31, 32₁, ..., 32_{N}) à l'entrée duquel est amené un premier signal d'extraction multiplexé (MS_{D1}) et aux sorties duquel sont délivrés des signaux d'extraction WDM (W_{D1}, W_{D2}) contenant des signaux d'extraction tributaires (λ₁, λ₂, ...) présélectionnés,
dans lequel respectivement un amplificateur optique (10₁, 13₁) est connecté aux sorties de l'élément de présélection (31, 32₁, ..., 32_{N}),
dans lequel des entrées des éléments de routage / extraction (12₁, 12₂, ..., 13₁, 13₂) sont connectés respectivement via les amplificateurs (10₁, 13₁) à une sortie d'éléments de présélection (33, 37) d'autres dispositifs d'insertion / extraction, un élément de routage / extraction (12₁, 12₂, ..., 13₁, 13₂) comportant plusieurs séparateurs 1:Sd (12₁, ..., 13₁) et plusieurs commutateurs optiques M:1 (12₂, ..., 13₂) connectés à leurs sorties et un autre signal d'extraction WDM (W_{DM}) étant amené par au moins un autre signal multiplexé en longueur d'onde (MS_{M}),
en ce que respectivement un filtre réglable (14) est connecté à une sortie des commutateurs optiques M:1 (12₂, 13₂) pour sélectionner respectivement un signal d'extraction tributaire (λ_{D1}, λ_{D2}, ...),
dans lequel un signal d'extraction tributaire sélectionné (λ_{D1}) est routé via un module d'insertion / extraction /suite (34) ou est amené au répartiteur électrique (EXC),
dans lequel les signaux d'insertion tributaires (λ_{A1}) sont amenés à un commutateur 1:M (22₁) dans la branche d'insertion et
dans lequel des sorties de plusieurs commutateurs 1:M (22₁) sont reliés à des entrées de combinateurs 1:M (22₂, 23₂, 34) qui regroupent les signaux d'insertion tributaires (λ_{A1}) pour en faire un signal d'insertion WDM (W_{A1}).

13. Dispositif de répartition selon la revendication 10 ou 11,
dans lequel
est amené à un élément de présélection (37, 38, 39), dans une branche d'extraction, un premier signal d'extraction multiplexé (MS_{D1}) qui partage le signal d'extraction multiplexé (MS_{D1}) en plusieurs signaux d'extraction WDM (W_{D1}, W_{D2}) contenant différents signaux d'extraction tributaires (λ_{D1}, λ_{D2}; λ_{3D}, λ_{D4}, ...),
dans lequel des amplificateurs (101, 102) sont connectés aux sorties de l'élément de présélection (37, 38, 39),
dans lequel respectivement un séparateur (12₂) est connecté à des sorties des amplificateurs (10₁, 10₂) en tant qu'éléments de routage et
dans lequel sont connectés, aux sorties des séparateurs (12₂), des filtres réglables (14) pour la sélection individuelle de signaux d'extraction tributaires (λ_{D1}), dont les sorties sont respectivement reliées à un module d'insertion / extraction / suite (16).
